# EUROPÄISCHE PATENTSCHRIFT

(11) **EP 3 396 234 B1**
(45) Veröffentlichungstag und Bekanntmachung des Hinweises auf die Patenterteilung: **18.09.2019**
(21) Anmeldenummer: 18153190.6
(22) Anmeldetag: 24.01.2018
(51) Int. Cl.: F21S 8/02, F21V 21/30, F21Y 115/10

(54) **BELEUCHTUNGSEINRICHTUNG**
ILLUMINATION DEVICE
DISPOSITIF D'ÉCLAIRAGE

(30) Priorität: 28.04.2017 DE 102017109135
(43) Veröffentlichungstag der Anmeldung: 31.10.2018
(73) Patentinhaber: Insta GmbH, 58509 Lüdenscheid (DE)
(72) Erfinder: Voigtländer, Andreas, 58509 Lüdenscheid (DE); Höngen, Markus, 58553 Halver (DE)

(56) Entgegenhaltungen:
- EP-A1- 2 110 282
- EP-A2- 1 477 726
- DE-B4-102012 101 228
- FR-A1- 3 013 160
- US-A- 2 649 535

## Beschreibung

Die vorliegende Erfindung geht von einer gemäß Oberbegriff des Hauptanspruches konzipierten Beleuchtungseinrichtung aus, die zur Unterbringung in übliche Unterputzinstallationsdosen vorgesehen ist.

Derartige Beleuchtungseinrichtungen sind in der Regel dafür vorgesehen, innerhalb und/oder außerhalb von Gebäuden für die gezielte Ausleuchtung ihrer Umgebung, für die Anleuchtung von direkt in ihrer Umgebung befindlicher Gegenstände und/oder für eine Orientierungs-, Ambiente- beziehungsweise Signalisierungsbeleuchtung zu sorgen. Werden solche Beleuchtungseinrichtungen zum Beispiel zum Einbau in Decken, Wänden oder Gebäudefassaden verwandt, ist zum problemlosen Einbau oftmals eine kompakte Bauweise bei robuster Ausführung notwendig. Zunehmend wichtig ist, dass solche Beleuchtungseinrichtungen ein ansprechendes Design aufweisen und bei kompakter Bauform für den Benutzer eine auf den Anwendungszweck abstimmbare Lichtabgabe ermöglichen.

Eine Beleuchtungseinrichtung, vorgesehen zur Montage in übliche Unterputzinstallationsdosen, ist durch die DE 20 2005 018 867 U1 bekannt geworden. Diese Beleuchtungseinrichtung ist vorgesehen zur Unterbringung in übliche Unterputzinstallationsdosen, wobei die Beleuchtungseinrichtung ein in einem ersten Gehäuse angeordnetes Netzteil und ein mit einem Tragring versehenes, zur Unterbringung eines Leuchtenmoduls vorgesehenes zweites Gehäuse aufweist. Das Leuchtenmodul steht zur Energieversorgung elektrisch leitend mit dem Netzteil in Verbindung, welches seinerseits an das elektrische Installationssystem eines Gebäudes angeschlossen ist. Als Leuchtmittel weist das Leuchtenmodul dieser Beleuchtungseinrichtung zumindest eine LED auf.

Zudem ist durch die US 2 649 535 A eine Beleuchtungseinrichtung bekannt geworden. Die Beleuchtungseinrichtung weist ein in einem ersten Gehäuse angeordnetes Netzteil und ein mit einem Träger zu versehenes, zur Unterbringung eines Leuchtenmoduls vorgesehenes zweites Gehäuse auf, wobei das Leuchtenmodul zur Energieversorgung elektrisch leitend mit dem Netzteil in Verbindung steht, welches Netzteil seinerseits an das elektrische Installationssystem eines Gebäudes anschließbar ist und wobei das Leuchtenmodul eine kugelförmige Leuchte aufweist, welche verschwenkbar an einem am zweiten Gehäuse festgelegten Lagerblech geführt ist. Solche Beleuchtungseinrichtungen sind schon wegen ihrer beachtlichen Abmessungen lediglich für eine Aufputzmontage an einer Gebäudewand oder Gebäudedecke vorgesehen. Für eine Unterputzmontage sind derartige Beleuchtungseinrichtungen nicht geeignet und lassen sich auch nicht besonders stimmig in das Design bereits bestehender Abdeckprogramme integrieren.

Außerdem ist durch die EP 1 477 726 A2 eine LED-Einbauleuchte bekannt geworden. Diese LED-Einbauleuchte enthält eine Baueinheit mit mindestens einer LED und einem Netzteil und Befestigungsmitteln zur Befestigung der Baueinheit in einer handelsüblichen Elektroinstallationsdose, insbesondere in einer Unterputzdose.

Des Weiteren ist durch die DE 10 2012 101 228 B4 eine schwenkbare Kugelleuchte bekannt geworden, deren Schwenkbereich durch Anschläge begrenzt ist. Die Kugelleuchte umfasst ein Leuchtengehäuse, in dessen Innenraum ein in einem vorgegebenen dreidimensionalen Bereich um einen Schwenkwinkel verschwenkbarer Leuchtenkörper mit einer Leuchtmittelaufnahme für zumindest ein Leuchtmittel vorgesehen ist. Vor der Leuchtmittelaufnahme ist eine Vorsatzlinse angeordnet, die zusammen mit dem Leuchtenkörper eine kugelförmige oder kugelkalottenförmige Außenfläche bildet. Das Leuchtengehäuse umfasst zumindest ein Auflager für die am Leuchtenkörper befestigte Vorsatzlinse und den Leuchtenkörper. Es sind Federungselemente vorgesehen, die den Leuchtenkörper und die daran befestigte Vorsatzlinse federnd gegen das zumindest eine Auflager drücken. Die Federungselemente stoßen bei maximaler Verschwenkung des Leuchtenkörpers an Anschlägen an, wobei durch die Anschläge der Schwenkwinkel so begrenzt ist, dass in jeder Stellung nur die Vorsatzlinse, nicht aber der Leuchtenkörper aus dem Leuchtengehäuse ragt, wodurch die Leuchte für alle einstellbaren Schwenkwinkel ein unverändertes Erscheinungsbild aufweist.

Zudem ist durch die EP 2 110 282 A1 ein Kabinenleselicht bekannt geworden, welches eine Leuchte, eine Lichtquelle, einen Lichthauptkörper und eine Feder enthält. Die Abdeckung der Leuchte weist eine äußere Oberfläche auf, die aus einem Teil einer kugelförmigen Oberfläche gebildet ist. Der Körper der Leuchte ist aus einem Metall gebildet und weist eine Rückfläche auf, die aus einem anderen Teil der Kugefläche gebildet ist. Der Lichthauptkörper umfasst einen Aufnahme- / Führungsabschnitt, der die äußere Oberfläche trägt. Der Aufnahme- / Führungsabschnitt trägt die Leuchte, so dass die Leuchte drehbar ist, wodurch ermöglicht wird, dass die Richtung des von der Leuchte ausgesandten Lichtes geändert wird. Die Leuchte wird in den Leuchtenhauptkörper eingepasst, in dem die Rückseitenfläche mit Hilfe der Feder angedrückt wird. Entweder ist der Aufnahme- / Führungsabschnitt oder die Abdeckung aus einem Metall oder aus Kunststoff gebildet, um Probleme aufgrund von Gleitreibung bei Langzeitgebrauch zu vermeiden.

Außerdem ist durch die FR 3 013 160 A1 ein beleuchteter Schalter bekannt geworden. Der beleuchtete Schalter weist einen Schaltmechanismus, eine Stromversorgung und eine gedruckte Schaltung auf, die auf ihrer Vorderseite mindestens eine Beleuchtungskomponente trägt. Es ist eine Schaltgerätebefestigung vorgesehen, welche eine Dichtung umfasst.

Des Weiteren ist durch die DE 199 19 080 A1 eine Beleuchtungseinrichtung bekannt geworden. Bei dieser Beleuchtungseinrichtung sind mehrere als LED ausgeführte Leuchtmittel auf einer Leiterplatte angeordnet, welche über diese an ein Installationssystem eines Gebäudes anschließbar sind. Diese Beleuchtungseinrichtung kann beispielsweise so aufgebaut sein, dass deren Gehäuse in einer geschlossenen Bauform aus Kunststoff gebildet wird, wobei die Leuchtmittel und die dazugehörige Stromversorgung durch dieses komplett aufgenommen und über Anschlüsse mit dem Stromnetz verbindbar sind. Die Bauform ist dabei so gewählt, dass die Beleuchtungseinrichtung in handelsübliche Unterputzdosen, Kabelkanäle und so weiter eingebaut werden kann. Durch die Verwendung einer Systemblende kann die Beleuchtungseinrichtung an das Design eines bestehenden Abdeckprogramms angepasst werden.

Bei einer derartigen Ausgestaltung der vorstehend beschriebenen Beleuchtungseinrichtungen ist nicht nur die Montage, Demontage beziehungsweise Auswechslung des Leuchtengehäuses/Leuchtmittels mit einem erhöhten Aufwand verbunden, sondern es besteht für den Benutzer, bis auf die Möglichkeit eine Änderung der Lichtfarbe vorzunehmen, keine Möglichkeit, die Lichtabgabe auf einen bestimmten Anwendungszweck abzustimmen.

Der vorliegenden Erfindung liegt deshalb die Aufgabe zugrunde, eine Beleuchtungseinrichtung zu schaffen, welche sich bei Verwendung üblicher Installationskomponenten (Tragring, Unterputzdose) bei besonders kompakter Bauform auf einfache und kostengünstige Art und Weise an das Installationssystem eines Gebäudes anschließen lässt und welche zudem benutzerseitig auf besonders einfache Art und Weise hinsichtlich der Lichtabgabe auf bestimmte Anwendungszwecke abgestimmt werden kann.

Diese Aufgabe wird durch die im Hauptanspruch angegebenen Merkmale gelöst.

Bei einer solchermaßen ausgebildeten Beleuchtungseinrichtung ist besonders vorteilhaft, dass sich das mit dem Leuchtmittel beziehungsweise den Leuchtmitteln versehene Leuchtengehäuse werkzeuglos am zweiten Gehäuse derart befestigen lässt, so dass sich dieses durch den Benutzer wunschgemäß verschwenken und/oder verdrehen lässt, um hinsichtlich der Lichtabgabe eine Abstimmung auf bestimmte Anwendungszwecke vornehmen zu können. Besonders vorteilhaft lässt sich dieses dann realisieren, wenn das Leuchtenmodul mit einer Leuchte versehen ist, die ein kugelförmiges Leuchtengehäuse aufweist. Zudem ist bei einer derartig ausgeführten Beleuchtungseinrichtung besonders vorteilhaft, dass sich das kompakte Leuchtengehäuse besonders stimmig in das Design bereits bestehender Abdeckprogramme eines Herstellers von Installationsgeräten integrieren lässt.

Weitere vorteilhafte Ausgestaltungen des erfindungsgemäßen Gegenstandes sind in den Unteransprüchen angegeben. Anhand eines Ausführungsbeispiels sei der erfindungsgemäße Gegenstand näher beschrieben, dabei zeigen:

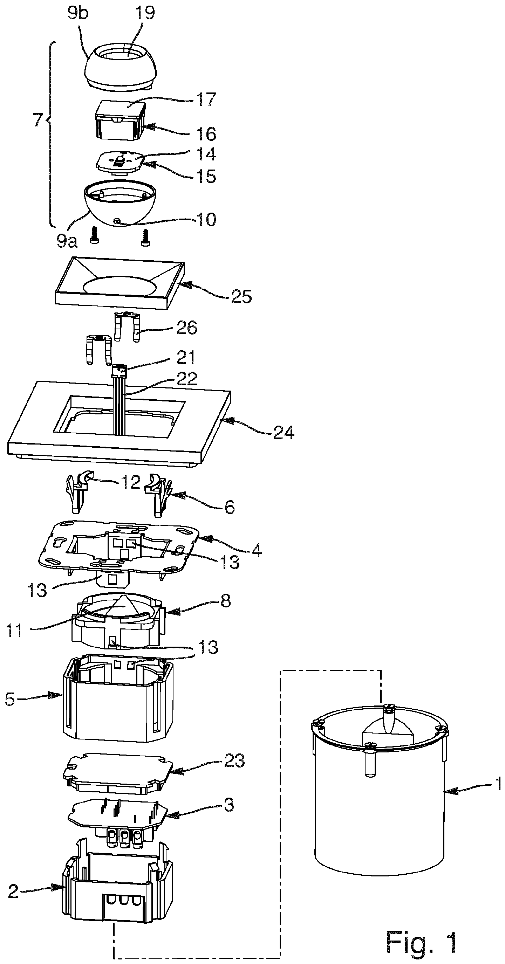

- Fig. 1:: prinziphaft eine Unterputzinstallationsdose und eine zugeordnete Beleuchtungseinrichtung, räumlich in Explosionsdarstellung, wobei die Explosionsdarstellung in eine große Anzahl von Details aufgelöst ist;

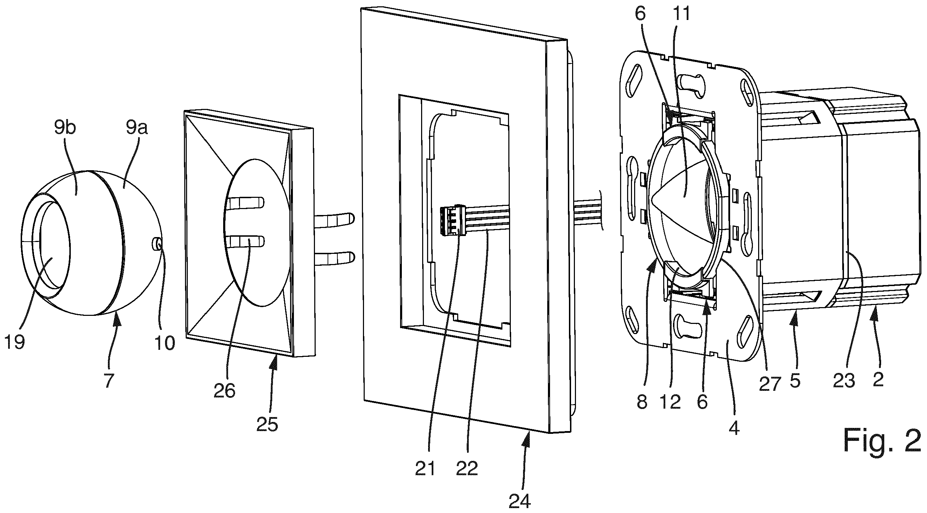

- Fig. 2:: prinziphaft eine gemäß Figur 1 ausgeführte Beleuchtungseinrichtung, räumlich in Explosionsdarstellung, wobei die Leuchte und die zur Aufnahme der Leuchte vorbereitete Gehäuseanordnung im Zusammenbau dargestellt sind;

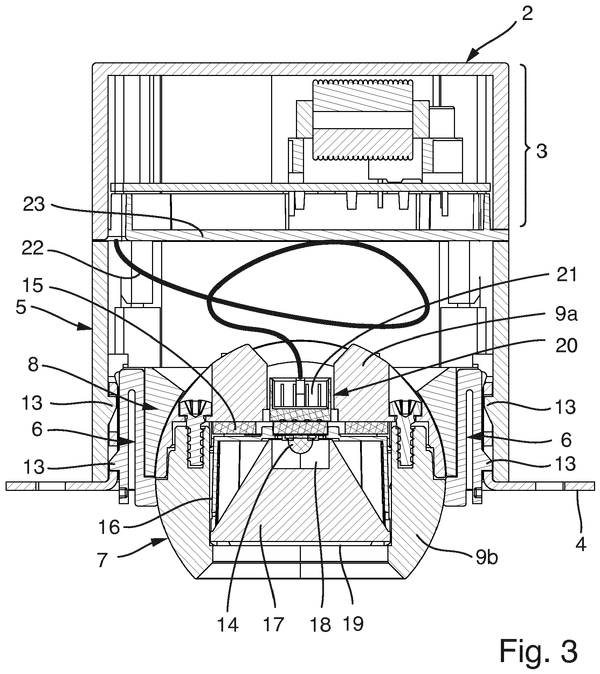

- Fig. 3:: prinziphaft eine gemäß Figur 1 ausgeführte Beleuchtungseinrichtung, räumlich im Zusammenbau als Vollschnitt, ohne Designrahmen und ohne Designzentralstück.

Wie aus den Figuren hervorgeht, besteht eine solche, zur Unterbringung in übliche Unterputzinstallationsdosen 1 vorgesehene Beleuchtungseinrichtung im Wesentlichen aus einem ersten Gehäuse 2, in welchem ein Netzteil 3 untergebracht ist und aus einem mit einem Tragring 4 versehenen zweiten Gehäuse 5, welches zur Unterbringung eines Leuchtenmoduls vorgesehen ist. Das Leuchtenmodul steht zur Energieversorgung elektrisch leitend mit dem Netzteil 3 in Verbindung, welches seinerseits an das elektrische Installationssystem eines Gebäudes (der Einfachheit halber nicht dargestellt) angeschlossen werden kann. Das Leuchtenmodul weist eine kugelförmige Leuchte 7 auf, welche verschwenkbar und/oder verdrehbar in einer am zweiten Gehäuse 5 festgelegten Lagerschale 8 geführt ist. Am zweiteilig ausgeführten Leuchtengehäuse 9a, 9b der kugelförmigen Leuchte 7 sind zwei Zapfen 10 vorhanden, die zur Schwenk- und/oder Drehbegrenzung mit je einer in der Lagerschale 8 vorhandenen Steuergeometrie 11 zusammenwirken.

Beim vorliegenden Ausführungsbeispiel besteht das Leuchtenmodul aus der kugelförmigen Leuchte 7, der zur lagernden Aufnahme der kugelförmigen Leuchte 7 vorgesehenen, aus Metall bestehenden Lagerschale 8 und zwei zur Entnahmesicherung der kugelförmigen Leuchte 7 dienenden Clipselementen 6, welche einerseits clipsend mit dem ebenfalls aus Metall hergestellten Tragring 4 in Wirkverbindung kommen und welche andererseits mit ihrer Lagerfläche 12 gleitend je mit dem ersten Leuchtengehäuseteil 9a und/oder dem zweiten Leuchtengehäuseteil 9b der kugelförmigen Leuchte 7 zusammenwirken. Die haltende Wirkung beziehungsweise Entnahmesicherung der beiden Clipselemente 6 wird dadurch erzeugt, weil diese mit ihren Lagerflächen 12 benutzerseitig oberhalb des größten Durchmesserbereiches des Leuchtengehäuses 9a, 9b an der kugelförmigen Leuchte 7 zur Anlage kommen.

Wie des Weiteren aus den Figuren hervorgeht, steht der aus Metall hergestellte Tragring 4 mittels mehrerer Clipsverbindungen 13 sowohl mit dem zweiten Gehäuseteil 5 als auch mit der aus Metall bestehenden Lagerschale 8 in Wirkverbindung. Eine derartige Wirkverbindung beziehungsweise die dadurch geschaffenen Anlageflächen zwischen dem Tragring 4 und der Lagerschale 8 sorgen dafür, dass die durch das Leuchtmittel 14 erzeugte Wärme effektiv an die Umgebung abgegeben werden kann. Da auch das erste Leuchtengehäuseteil 9a aus Metall besteht, ist ein guter Wärmeübertragungsweg geschaffen, welcher, ausgehend von dem Leuchtmittel 14, über das metallene erste Leuchtegehäuse 9a und die aus Metall bestehende Lagerschale 8 bis zum großflächigen, ebenfalls aus Metall bestehenden Tragring 4 führt. Letztendlich wird über die vergleichsweise große Fläche des Tragringes 4 die Wärme effektiv an die Umgebung abgegeben.

Im Innenraum des zweiteilig ausgeführten Leuchtengehäuses 9a, 9b befindet sich, flächig auf dem ersten Gehäuseteil 9a aufliegend, was ebenfalls einer guten Wärmeübertragung dient, eine Leiterplatte 15, welche mit dem als LED ausgeführten Leuchtmittel 14 bestückt ist. Zudem sind im Innenraum des Leuchtengehäuses 9a, 9b ein das Leuchtmittel 14 umgebender Lichtkasten 16 und ein am Lichtkasten 16 angebrachter Lichtleitkörper 17 vorhanden. Der Lichtleitkörper 17 ist einerseits zur Einkopplung des von dem Leuchtmittel 14 abgegebenen Lichtes mit einem, diesem zugewandten Lichteinkoppelbereich 18 versehen und weist andererseits, benutzerseitig dem zweiten Gehäuseteil 9b zugeordnet, einen Lichtauskoppelbereich auf. Der Lichtauskoppelbereich ist bei diesem Ausführungsbeispiel einem augenartig ausgeführten Lichtaustrittsbereich 19 des zweiten Leuchtengehäuseteils 9b zugeordnet. Dem Netzteil 3 zugewandt, ist das erste Leuchtengehäuseteil 9a mit einem die elektrische Verbindung mit dem Netzteil 3 ermöglichenden Anschlussbereich 20 versehen. Der Anschlussbereich 20 ist zur Kontaktierung mit einem Stecker 21 vorgesehen, an den mehrere, mit dem Netzteil 3 in Verbindung stehende elektrische Leitungen 22 angeschlossen sind. Zur Bildung einer Bewegungsreserve weisen die elektrischen Leitungen 22 eine schlaufenartige Verlegung innerhalb des Innenraumes des zweiten Gehäuses 5 auf. Die Bewegungsreserve ist notwendig, um für den Benutzer ein ungehindertes Verschwenken und/oder Verdrehen der kugelförmigen Leuchte 7 zu ermöglichen. Auch ist diese Bewegungsreserve notwendig, damit der Benutzer bei Bedarf auf besonders einfache Art und Weise einen Austausch der kugelförmigen Leuchte 7 vornehmen kann.

Zur Abgrenzung des ersten Gehäuses 2 vom zweiten Gehäuse 5 ist ein einziger Trennboden 23 vorgesehen, um eine sichere elektrische Trennung zwischen diesen beiden Gehäusen 2, 5 zu schaffen. In dem mit dem Netzteil 3 versehenen ersten Gehäuse 2 liegt die aus dem Installationssystem des Gebäudes entnommene normale Netzspannung in Höhe von ca. 220 Volt an. Im zweiten Gehäuse 5 liegt lediglich die sogenannte "SELV-Spannung" (im vorliegenden Fall ca. 5 Volt) an, um dem Benutzer eine gefahrlose Handhabung der kugelförmigen Leuchte 7 zu ermöglichen.

Wie zudem aus den Figuren hervorgeht, weist die Beleuchtungseinrichtung zur Bildung eines benutzerseitigen, formschönen Abschlusses einen Designrahmen 24 auf, welcher mittels eines den Durchtritt des Leuchtengehäuses 9a, 9b ermöglichenden Designzentralstücks 25 am Tragring 4 zu befestigen ist. Zur Befestigung weist das Designzentralstück 25 mehrere Befestigungsfedern 26 auf, welche mit entsprechend ausgeführten Befestigungsausnehmungen 27 des Tragringes 4 haltend zusammenwirken.

Auf einfache Art und Weise ist eine Beleuchtungseinrichtung, vorgesehen zur Unterbringung in übliche Unterputzinstallationsdosen 1, realisiert. Eine derart ausgeführt Beleuchtungseinrichtung lässt sich bei Verwendung üblicher Installationskomponenten (Tragring, Unterputzdose) bei besonders kompakter Bauform auf einfache und kostengünstige Art und Weise an das Installationssystem eines Gebäudes anschließen. Vorteilhafterweise kann der Benutzer auf besonders komfortable Art und Weise die Lichtabgabe auf bestimmte Anwendungszwecke abstimmen, indem dieser die Leuchte 7 durch einfache Handgriffe bedarfsgerecht verschwenkt und/oder verdreht. Weiterhin ist bei einer solchermaßen ausgebildeten Beleuchtungseinrichtung besonders vorteilhaft, dass sich die Leuchte 7 werkzeuglos am zweiten Gehäuse 5 befestigen lässt.

### Bezuaszeichenliste:

- 1: Unterputzinstallationsdosen
- 2: Erstes Gehäuse
- 3: Netzteil
- 4: Tragring
- 5: Zweites Gehäuse
- 6: Cipselemente
- 7: Kugelförmige Leuchte
- 8: Lagerschale
- 9a: Erstes Leuchtengehäuseteil
- 9b: Zweites Leuchtengehäuseteil
- 10: Zapfen
- 11: Steuergeometrie
- 12: Lagerfläche
- 13: Clipsverbindungen
- 14: Leuchtemittel
- 15: Leiterplatte
- 16: Lichtkasten
- 17: Lichtleitkörper
- 18: Lichteinkoppelbereich
- 19: Lichtaustrittsbereich
- 20: Anschlussbereich
- 21: Stecker
- 22: Elektrische Leitungen
- 23: Trennboden
- 24: Designrahmen
- 25: Designzentralstück
- 26: Befestigungsfedern
- 27: Befestigungsausnehmungen

## Patentansprüche

1. Beleuchtungseinrichtung, vorgesehen zur Unterbringung in übliche Unterputzinstallationsdosen (1), wobei die Beleuchtungseinrichtung ein in einem ersten Gehäuse (2) angeordnetes Netzteil (3) und ein mit einem Tragring (4) aus Metall versehenes, zur Unterbringung eines Leuchtenmoduls vorgesehenes zweites Gehäuse (5) aufweist, wobei das Leuchtenmodul zur Energieversorgung elektrisch leitend mit dem Netzteil (3) in Verbindung steht, welches Netzteil (3) seinerseits an das elektrische Installationssystem eines Gebäudes anschließbar ist, wobei das Leuchtenmodul eine kugelförmige Leuchte (7) aufweist, welche verschwenkbar und/oder verdrehbar in einer am zweiten Gehäuse (5) festgelegten Lagerschale (8) aus Metall geführt ist, wobei am zweiteilig ausgeführten Leuchtengehäuse (9a, 9b) der kugelförmigen Leuchte (7) zumindest zwei Zapfen (10) vorhanden sind, die zur Schwenk- und/oder Drehbegrenzung je mit zumindest einer in der Lagerschale (8) vorhandenen Steuergeometrie (11) zusammenwirken, und wobei zur Halterung des Leuchtengehäuses (9a, 9b) an der Lagerschale (8) zwei Clipselemente (6) vorgesehen sind, welche einerseits clipsend mit dem Tragring (4) in Verbindung kommen und welche andererseits mit ihrer Lagerfläche (12) gleitend je mit dem ersten Leuchtengehäuseteil (9a) und/oder dem zweiten Leuchtengehäuseteil (9b) der kugelförmigen Leuchte (7) zusammenwirken, der sich auf derjenigen jenseits des größten Durchmesserbereichs des Leuchtengehäuses (9a, 9b) befindlichen Seite des Leuchtengehäuses (9a, 9b) befindet, welche dem Inneren der Beleuchtungseinrichtung abgewandt ist, und wobei im Innenraum des zweiteilig ausgeführten Leuchtengehäuses (9a, 9b) eine mit zumindest einem Leuchtmittel (14) bestückte Leiterplatte (15) und ein mit zumindest einem Lichtleitkörper (17) versehener Lichtkasten (16) aufgenommen sind.

2. Beleuchtungseinrichtung nach Anspruch 1, **dadurch gekennzeichnet, dass** das dem Netzteil (3) zugewandte erste Leuchtengehäuseteil (9a) des zweiteilig ausgeführten Leuchtengehäuses mit einem die elektrische Verbindung mit dem Netzteil (3) ermöglichenden Anschlussbereich (20) versehen ist.

3. Beleuchtungseinrichtung nach Anspruch 2, **dadurch gekennzeichnet, dass** der Anschlussbereich (20) als Steckanschluss ausgeführt ist.

4. Beleuchtungseinrichtung nach Anspruch 2, **dadurch gekennzeichnet, dass** der Anschlussbereich als Klemmanschluss ausgeführt ist.

5. Beleuchtungseinrichtung nach einem der Ansprüche 1 bis 4, **dadurch gekennzeichnet, dass** das benutzerseitig nach außen geführte zweite Leuchtengehäuseteil (9b) des zweiteilig ausgeführten Leuchtengehäuses mit einem augenartig ausgeführten Lichtaustrittsbereich (19) versehen ist.

6. Beleuchtungseinrichtung nach einem der Ansprüche 1 bis 5, **dadurch gekennzeichnet, dass** zur Abgrenzung des ersten Gehäuses (2) vom zweiten Gehäuse (5) ein einziger Trennboden (23) vorgesehen ist.

7. Beleuchtungseinrichtung nach einem der Ansprüche 1 bis 6, **dadurch gekennzeichnet, dass** zur elektrischen Verbindung zwischen dem Netzteil (3) und der kugelförmigen Leuchte (7) mehrere elektrische Leitungen (22) vorgesehen sind.

8. Beleuchtungseinrichtung nach Anspruch 7, **dadurch gekennzeichnet, dass** die elektrischen Leitungen (22) zur Bildung einer Bewegungsreserve schlaufenartig im Innenraum des zweiten Gehäuses (5) verlegt sind.

9. Beleuchtungseinrichtung nach einem der Ansprüche 1 bis 8, **dadurch gekennzeichnet, dass** zur Bildung eines benutzerseitigen, formschönen Abschlusses ein Designrahmen (24) vorgesehen ist, welcher mittels eines den Durchtritt des Leuchtengehäuses (9a, 9b) ermöglichenden Designzentralstücks (25) am Tragring (4) festlegbar ist.

## Claims

1. Lighting unit for installation in common flush-mounted installation boxes (1), wherein the lighting unit comprises a power supply unit (3) arranged in a first housing (2) and a second housing (5) provided with a metal bearing ring (4) for housing a luminaire module, wherein the luminaire module is electrically connected to the power supply unit (3) for power supply, which power supply unit (3), for its part, can be connected to the electrical installation system of a building, wherein the luminaire module comprises a ball-shaped luminaire (7), which is held pivotably and/or rotatably in a metal bearing shell (8) at the second housing (5), wherein the 2-part luminaire housing (9a, 9b) of the ball-shaped luminaire (7) has at least two pins (10), each of which interacts with at least one control geometry (11) provided in the bearing shell (8) for pivot and/or rotation limitation, and wherein two clips (6) are provided to hold the luminaire housing (9a, 9b) at the bearing shell (8), which clips on the one hand clip into the bearing ring (4) and on the other hand their bearing surface (12) interacts slidingly with the first part of the luminaire housing (9a) and/or the second part of the luminaire housing (9b) of the ball-shaped luminaire (7), which part is on that side of the luminaire housing (9a, 9b) which is beyond the area of the luminaire housing (9a,9b) with the largest diameter, on the side facing away from the inside of the lighting unit, and wherein inside the two-part luminaire housing (9a, 9b) one PCB (15) equipped with at least one luminaire (14) and one light box (16) equipped with at least one light guide body (17) are placed.

2. Lighting unit in accordance with Claim 1, **characterized by the fact** that the first part (9a) of the two-part luminaire housing facing the power supply unit (3) is provided with ports (20) enabling the electrical connection with the power supply unit (3).

3. Lighting unit in accordance with Claim 2, **characterized by the fact** that the ports (20) are designed as plug-in connection.

4. Lighting unit in accordance with Claim 2, **characterized by the fact** that the ports are designed as clamp connection.

5. Lighting unit in accordance with any of Claims 1 to 4, **characterized by the fact** that the second part (9b) of the two-part luminaire housing which is lead to the outside on the user side has an eye-shaped light emission aperture (19).

6. Lighting unit in accordance with any of Claims 1 to 5, **characterized by the fact** that one single partition wall (23) is provided for delimitation between the first housing (2) and the second housing (5).

7. Lighting unit in accordance with any of Claims 1 to 6, **characterized by the fact** that several electrical leads (22) are provided for electrical connection between the power supply unit (3) and the ball-shaped luminaire (7).

8. Lighting unit in accordance with Claim 7, **characterized by the fact** that the electrical leads (22) are laid in loops in the interior of the second housing (5) to form a movement reserve.

9. Lighting unit in accordance with any of Claims 1 to 8, **characterized by the fact** that, to allow an elegant finish of the design frame (24) on the side of the user, a design frame (24) is provided which can be fastened at the bearing ring (4) by means of a central design piece (25) allowing the passing through of the luminaire housing (9a, 9b).

## Revendications

1. Dispositif d'éclairage prévu pour être logé dans des boîtes d'installation encastrées conventionnelles (1), dans lequel le dispositif d'éclairage comporte une unité d'alimentation électrique (3) disposée dans un premier boîtier (2) et un second boîtier (5) muni d'une bague de support métallique (4) et prévu pour recevoir un module d'éclairage, le module d'éclairage étant relié électriquement à l'unité d'alimentation (3) par une liaison conductrice pour fournir l'énergie, laquelle unité d'alimentation (3), à son tour, peut être reliée au système d'installation électrique d'un bâtiment, le module de luminaire comportant un luminaire sphérique (7) qui est guidé de manière pivotante et/ou rotative dans un coussinet métallique (8) fixé au deuxième boîtier (5), au moins deux broches (10) étant présentes sur le boîtier en deux parties (9a, 9b) du luminaire sphérique (7), qui coopèrent chacune avec au moins une géométrie de commande (11) présente dans le coussinet (8) pour limiter le pivotement et/ou la rotation, et dans lequel deux éléments de serrage (6) sont prévus sur le coussinet (8) pour maintenir le boîtier de luminaire (9a, 9b), lesquels éléments de serrage (6) d'une part sont liés à la bague support (4) par clip et d'autre part leur surface support (12) coopère par glissement avec la première partie du boîtier de luminaire (9a) et/ou la seconde partie du boîtier de lumière (9b) du luminaire sphérique (7) qui se trouve sur le côté du boîtier de luminaire (9a, 9b) qui se trouve au-delà de la plus grande plage de diamètre du boîtier de luminaire (9a, 9b) et qui est opposé à l'intérieur du dispositif d'éclairage, et dans lequel une plaquette à circuit imprimé (15) équipée d'au moins un moyen d'éclairage (14) et une boîte à lumière (16) munie d'au moins un corps guide lumière (17) sont placées à l'intérieur du boîtier de luminaire à deux pièces (9a, 9b).

2. Dispositif d'éclairage selon la revendication 1, **caractérisé en ce que** la première partie (9a) du boîtier de luminaire en deux parties faisant face à l'unité d'alimentation (3) est muni d'un raccordement (20) permettant la connexion électrique avec l'unité d'alimentation (3).

3. Dispositif d'éclairage selon la revendication 2, **caractérisé en ce que** le raccordement (20) est disposé comme connexion enfichable.

4. Dispositif d'éclairage selon la revendication 2, **caractérisé en ce que** le raccordement (20) est disposé comme connexion à bornes.

5. Dispositif d'éclairage selon l'une des revendications 1 à 4, **caractérisé en ce que** la deuxième partie (9b) du boîtier de luminaire en deux parties, qui, du côté utilisateur, est guidée vers l'extérieur, est munie d'une zone de sortie de lumière (19) en forme d'oeil.

6. Dispositif d'éclairage selon l'une des revendications 1 à 5, **caractérisé en ce qu'une** base de séparation unique (23) est prévue pour séparer le premier boîtier (2) du second boîtier (5).

7. Dispositif d'éclairage selon l'une des revendications 1 à 6, **caractérisé en ce qu'**une pluralité de conducteurs électriques (22) sont prévus pour la connexion électrique entre l'unité d'alimentation (3) et le luminaire sphérique (7).

8. Dispositif d'éclairage selon la revendication 7, **caractérisé en ce que** les conducteurs électriques (22) sont placés en forme de boucles à l'intérieur du deuxième boîtier (5) pour former une réserve de mouvement.

9. Dispositif d'éclairage selon l'une des revendications 1 à 8, **caractérisé en ce qu'un** cadre dècoratif (24) est prévu pour réaliser une conception élégante côté utilisateur, lequel cadre décoratif peut être fixé à l'anneau de support (4) au moyen d'une pièce centrale décoratif (25) permettant le passage du boîtier de luminaire (9a, 9b).
